# EUROPEAN PATENT SPECIFICATION

(11) **EP 1 952 459 B1**
(45) Date of publication and mention of the grant of the patent: **30.04.2014**
(21) Application number: 06799238.8
(22) Date of filing: 16.10.2006
(51) Int. Cl.: H01M 2/16, H01M 4/62, H01M 10/052, H01M 10/0567, H01M 4/02, H01M 10/058, H01M 10/42

(54) **SECONDARY BATTERY WITH IMPROVED LIFE CHARACTERISTICS**
SEKUNDÄRBATTERIE MIT VERBESSERTEN LEBENSDAUEREIGENSCHAFTEN
ACCUMULATEUR POSSEDANT DES CARACTERISTIQUES DE LONGEVITE AMELIOREES

(30) Priority: 26.10.2005 KR 20050101016
(43) Date of publication of application: 06.08.2008
(73) Proprietor: LG Chem, Ltd., Youngdungpo-gu, Seoul 150-721 (KR)
(72) Inventor: RYU, Ji Heon, Seoul 142-865 (KR); LEE, Eun Ju, Daejeon 302-120 (KR); LEE, Jaepil, Daejeon 305-340 (KR); HYUN, Jung Eun, Seoul 138-225 (KR); CHOI, Jeong Hee, Busan 608-794 (KR); KIM, Min Su, Daejeon 302-120 (KR); SHIN, Youngjoon, Daejeon 305-761 (KR)
(74) Representative: HOFFMANN EITLE
(86) International application number: PCT/KR2006/004160
(87) International publication number: WO 2007/049871

(56) References cited:
- EP-A1- 0 942 485
- WO-A1-2007/049853
- AU-A- 4 168 000
- JP-A- 7 262 999
- JP-A- 8 171 938
- JP-A- 9 180 758
- JP-A- 10 154 532
- JP-A- 11 067 233
- JP-A- 11 154 535
- JP-A- 61 264 682
- JP-A- 2005 005 117
- KR-A- 20040 111 470
- US-A- 5 487 960
- US-A1- 2004 248 009
- US-A1- 2005 186 469

## Description

### FIELD OF THE INVENTION

The present invention relates to a lithium secondary battery having improved life characteristics. More specifically, the present invention relates to a lithium secondary battery having improved life characteristics, wherein metal ion impurities incorporated during an assembly process of the battery are precipitated and removed to thereby prevent electrodeposition of the metal ions on an anode, thus improving life characteristics of the battery, by the addition of a phosphate represented by Formula I which will be illustrated hereinafter to an electrode active material, an electrolyte or the surface of a separator.

### BACKGROUND OF THE INVENTION

Rapid expansion in use of portable electronic equipment such as mobile phones, notebook computers, camcorders, digital cameras and the like has led to increased demands for secondary batteries having a high-energy density as a power source for such equipment. In recent years, applicability of secondary batteries has been realized as power sources for electric vehicles (EVs) and hybrid electric vehicles (HEVs).

As examples of such secondary batteries, lithium secondary batteries comprising an anode of a carbonaceous material, a cathode of a lithium metal oxide, a separator of a polyolefin material and a non-aqueous lithium salt electrolyte are widely used. For optimal use in the electronic equipment of interest or vehicles, the lithium secondary batteries require excellent life characteristics. As such, efforts and attempts to improve a battery life are continuously undertaken, because the battery must undergo little decrease of the capacity even after repeated charge/discharge cycles.

Batteries undergo deterioration of life characteristics due to degradation of individual components caused by various factors. One of the main causes for the deterioration of the battery life characteristics is incorporation of impurities into the battery. For example, as the incorporation of water into the battery accelerates the degradation of the battery performance, Korean Patent Registration No. 414588 discloses a technique of inhibiting adverse side reactions and gas evolution by adsorption of water and water-borne by-products via the addition of zeolite to an electrolyte. In addition, Japanese Patent Application No. 2003-323916 A1 discloses a technique of suppressing battery degradation by adsorption and removal of water, hydrofluoric acid, a by-product from the reaction of water with lithium salts, and the like, via the addition of zeolite to an electrode active material or the like.

JP 11-154535 A describes a non-aqueous electrolyte containing positive and negative electrodes and a lithium salt capable of absorbing and discharging lithium. JP 11-067233 A discloses an electrode having a current collector mainly comprising aluminum or copper wherein the electrode is impregnated with a water soluble polymer solution containing phosphorous or a phosphorous compound. JP 10-154532 A describes a mixture of LiCoO₂ powder, graphite powder, and polyvinylidene fluoride in a weight ratio of 80:20:10 in N-methyl-2-pyrolidone together with lithium phosphate which mixture is applied to both faces of a positive collector. US 2004/248009 describes a non-aqueous electrochemical cell, comprising: an active metal anode, a cathode depolarizer/electrolyte solvent; a dissolved electrolyte salt containing an active metal cation and an halo-containing anion; wherein the active metal anode is coated with an active metal ion-conducting protective film comprising an active metal salt selected from the group consisting of active metal phosphate, active metal metaphosphate and combinations thereof. US 5,487,960 describes a non-aqueous secondary battery comprising a positive electrode, negative electrode and an non-aqueous electrolytic solution, wherein the positive electrode comprises a mixture of active material and an acid containing at least one of P, B, Si, Mo and W or a salt thereof. JP 08-171938 A discloses a positive electrode to which a compound containing an element to form a solid electrolyte is added and a negative electrode with a solid electrolyte film. EP 0 942 485 A1 discloses a lithium secondary battery comprising: a battery case; an internal electrode body contained in the battery case and including a positive electrode, a negative electrode and a separator film made of porous polymer, the positive electrode and the negative electrode being wound or laminated so that the positive electrode and negative electrode are not brought into direct contact with each other via the separator film, an organic electrolyte solution contained in the battery case, and a zeolite having a moisture absorption characteristic, which is incorporated in the battery case so that the zeolite is brought into contact with the organic electrolyte solution within the battery case. JP 07-262999 A discloses lithium ion exchange type zeolite dispersed in an electrolyte between a positive electrode terminal and a negative electrode terminal. JP 61-264682 A discloses a flat type lithium-poly carbon fluoride system organic electrolyte battery that consists of a battery case, a sealing plate, a negative active material and a positive mix of polycarbon fluoride, acetylene black, and fluorine resin binder.

However, according to the experiments conducted by the inventors of the present invention, it was confirmed that internal short-circuiting occurs to thereby sharply decrease the battery capacity when metal impurities are incorporated into the battery, even after complete removal of water inside the battery or the by-products produced from the reaction of water with the lithium salts. Further, incorporation of large quantities of the metal impurities results in a failure to sufficiently fulfill functions of the battery. Therefore, maximum care should be taken to ensure that incorporation of the impurities does not occur upon fabrication of the lithium secondary battery. However, since it is in fact impossible to completely block the incorporation of the metal impurities into the battery, there is a need for the development of a technique to ensure that the internal short-circuiting of the battery does not take place even upon incorporation of the impurities.

### SUMMARY OF THE INVENTION

Therefore, the present invention has been made to solve the above problems and other technical problems that have yet to be resolved.

As a result of a variety of extensive and intensive studies and experiments to solve the problems as described above, the inventors of the present invention have discovered that, upon the fabrication of a lithium secondary battery by inclusion of a phosphate of Formula I, which will be illustrated hereinafter, inside the battery, it is possible to easily remove metal impurities seriously harmful to the life characteristics of the battery by precipitation of the metal cations through binding of the phosphate with the metal cations of the impurities. The present invention has been completed based on these findings.

### DETAILED DESCRIPTION OF PREFERRED EMBODIMENTS

Therefore, a lithium secondary battery according to the present invention is characterized in that metal ion impurities incorporated during a fabrication process of the battery are precipitated to prevent electrodeposition of the metal ions on an anode, through the addition of one or more phosphates of Formula I below to an electrode active material, an electrolyte or the surface of a separator.

AₓH₍₃₋ₓ₎PO₄ (I)

wherein, A is Li, Na or NH₄; and 0<x≤3.

That is, the secondary battery according to the present invention improves life characteristics of the battery by replacing metal ions of metal impurities with lithium ions, sodium ions and/or ammonium ions which are not detrimental to the operation of the battery, thereby precipitating and removing the impurities from the inside of the battery, through the incorporation of the above-mentioned phosphates of Formula I into the battery.

For example, where the metal impurities such as iron (Fe), copper (Cu), nickel (Ni) and cobalt (Co) are incorporated into a cathode, the impurities are eluted toward an electrolyte at an operation potential of the cathode, and once dissolved as a form of metal ions in the electrolyte, they are reduced at an anode and precipitated as metals. The thus-precipitated metals cause the occurrence of internal short-circuiting. Further, when the metal cations are also present in the electrolyte during the fabrication process of the battery, electrodeposition of the metal ions on the anode takes place, thus causing the internal short-circuiting of the battery. As a result, the metal ions eluted from the cathode or the metal ions in the impurities present in the electrolyte during the fabrication process of the battery undergo electrodeposition thereof on the anode during the battery operation, consequently resulting in the internal short-circuiting of the battery.

Whereas, according to the present invention, it is possible to previously prevent electrodeposition of the metal ions on the anode, due to replacement and precipitation of such metal ions with the lithium ions, sodium ions and/or ammonium ions in the phosphate of Formula I.

Further, a sodium phosphate among the above-mentioned phosphates provides precipitation of the metal ions as well as flame retardancy, thereby improving the safety of the battery.

There are several known methods of replacing conventional components of the lithium secondary battery with phosphates or of adding the phosphates to the battery components. For example, US Patent No. 6720110 discloses a lithium secondary battery using a lithium phosphate having a certain structure as an electrode active material, instead of conventional electrode active materials. Further, Japanese Patent Application No. 2005-5117 A1 discloses a technique of suppressing decomposition of electrolytes by inducing formation of stable coatings at an anode, via the use of fluoro-substituted [oxalato-O,O'] lithium phosphates as electrolyte salts. In addition, Korean Patent Application No. 2004-99606 A1 discloses a technique of adding a phosphate-based compound to crosslink an ion-conductive polymer, upon preparing a gelled electrolyte composition. However, to the best of our knowledge, no case has been found in the conventional prior arts wherein precipitation and removal of metal impurities are effected by addition of a certain phosphate as proposed in the present invention.

As preferred examples of the phosphates of Formula I, mention may be made of ammonium hydrogen phosphate, (NH₄)₂HPO₄, ammonium dihydrogen phosphate, NH₄H₂PO₄, lithium phosphate, Li₃PO₄, lithium dihydrogen phosphate, LiH₂PO₄, sodium phosphate, Na₃PO₄, sodium hydrogen phosphate, Na₂HPO₄ and sodium dihydrogen phosphate, NaH₂PO₄. These materials may be used alone or in any combination thereof. Among them, particularly preferred is lithium dihydrogen phosphate (LiH₂PO₄) which exhibits a high-precipitation rate per unit weight for metal cations of impurities and provides lithium ions directly acting on electrolytes of the lithium secondary batteries.

Therefore, a target part to which the phosphate may be added includes electrode active materials, electrolytes, and separator surface, as discussed above. Particularly preferably, the phosphate is added to a cathode upon fabrication thereof, or is added as a coating on the surface of a separator. In this connection, if the phosphate has a large particle size, it is difficult to coat the phosphate on the electrode or separator. Therefore, the particle size of the phosphate is preferably less than 50 µm.

The amount of the phosphate material added to the electrode active material or electrolyte is in a range of 0.005 to 5% by weight, based on the weight of the electrode active material or electrolyte. If the content of the phosphate added is excessively low, it may be difficult to substantially remove the metal impurities. If the content of the phosphate added is excessively high, this may undesirably lead to a decrease in an energy density of the battery or an increase in an internal resistance of the battery, thus causing deterioration of the battery performance.

When it is desired to coat the phosphate material on the surface of the separator, the phosphate, in conjunction with a fluorine-based material such as PVdF as a base material, is dispersed in a suitable solvent and then may be partially or completely coated on the surface of the separator by various coating methods known in the art. In accordance with the present invention, the phosphate material is coated in a range of 0.005 to 50 g/m² to the surface of the separator.

In accordance with the present invention, a cation exchange material, containing cations selected from the group consisting of lithium, sodium, ammonium and any combination thereof, is used, in conjunction with the phosphate of Formula I. The cation exchange material serves to remove metal ion impurities incorporated during an assembly process of the battery, via a cation exchange process.

The cation exchange material is a material containing lithium ions and the like while not exhibiting adverse side effects on the battery operation. In accordance with the present invention, the cation exchange material is alumino-silicate containing ammonium cations.

An amount of the cation exchange material to be added may be determined within the range where the total amount of the cation exchange material and the phosphate of Formula I does not exceed the above-specified content range.

Hereinafter, the other remaining components necessary for the lithium secondary battery according to the present invention will be described in more detail.

The lithium secondary battery of the present invention is comprised of a cathode, an anode, a separator and a lithium salt-containing, non-aqueous electrolyte, with inclusion of the cation exchange material as mentioned above.

The cathode is, for example, fabricated by applying a mixture of a cathode active material, a conductive material and a binder to a cathode current collector, followed by drying. If necessary, a filler may be further added to the above mixture.

Examples of the cathode active materials that can be used in the present invention may include, but are not limited to, layered compounds such as lithium cobalt oxide (LiCoO₂) and lithium nickel oxide (LiNiO₂), or compounds substituted with one or more transition metals; lithium manganese oxides such as compounds of Formula Li₁₊ₓMn₂₋ₓO₄ (0≤x≤0.33), LiMnO₃, LiMn₂O₃ and LiMnO₂; lithium copper oxide (Li₂CuO₂); vanadium oxides such as LiV₃O₈, V₂O₅ and Cu₂V₂O₇; Ni-site type lithium nickel oxides of Formula LiNi₁₋ₓMₓO₂ (M = Co, Mn, Al, Cu, Fe, Mg, B or Ga, and 0.01≤x≤0.3); lithium manganese composite oxides of Formula LiMn₂₋ₓMₓO₂ (M = Co, Ni, Fe, Cr, Zn or Ta, and 0.01≤x≤0.1), or Formula Li₂Mn₃MO₈ (M = Fe, Co, Ni, Cu or Zn); LiMn₂O₄ wherein a portion of Li is substituted with alkaline earth metal ions; disulfide compounds; Fe₂(MoO₄)₃, LiFe₃O₄ and the like.

The cathode current collector is generally fabricated to have a thickness of 3 to 500 µm. There is no particular limit to materials for the cathode current collector, so long as they have high conductivity without causing chemical changes in the fabricated battery. As examples of materials for the cathode current collector, mention may be made of stainless steel, aluminum, nickel, titanium, sintered carbon, and aluminum or stainless steel which was surface-treated with carbon, nickel, titanium or silver. The cathode current collector may be fabricated to have fine irregularities on the surface thereof so as to enhance adhesive strength to the cathode active material. In addition, the cathode current collector may take various forms including films, sheets, foils, nets, porous structures, foams and non-woven fabrics.

The conductive material is typically added in an amount of 1 to 50% by weight, based on the total weight of the mixture including the cathode active material. There is no particular limit to the conductive material, so long as it has suitable conductivity without causing chemical changes in the fabricated battery. As examples of conductive materials, mention may be made of conductive materials, including graphite such as natural or artificial graphite; carbon blacks such as carbon black, acetylene black, Ketjen black, channel black, furnace black, lamp black and thermal black; conductive fibers such as carbon fibers and metallic fibers; metallic powders such as carbon fluoride powder, aluminum powder and nickel powder; conductive whiskers such as zinc oxide and potassium titanate; conductive metal oxides such as titanium oxide; and polyphenylene derivatives.

The binder is a component assisting in binding between the active material and conductive material, and in binding with the current collector. The binder is typically added in an amount of 1 to 50% by weight, based on the total weight of the mixture including the cathode active material. As examples of the binder, mention may be made of polyvinylidene fluoride, polyvinyl alcohols, carboxymethylcellulose (CMC), starch, hydroxypropylcellulose, regenerated cellulose, polyvinyl pyrollidone, tetrafluoroethylene, polyethylene, polypropylene, ethylene-propylene-diene terpolymer (EPDM), sulfonated EPDM, styrene butadiene rubber, fluoro rubber and various copolymers.

The filler is an optional ingredient used to inhibit cathode expansion. There is no particular limit to the filler, so long as it does not cause chemical changes in the fabricated battery and is a fibrous material. As examples of the filler, there may be used olefin polymers such as polyethylene and polypropylene; and fibrous materials such as glass fiber and carbon fiber.

The anode is fabricated by applying anode materials to the anode current collector, followed by drying. If necessary, other components as described above may be further included.

The anode current collector is generally fabricated to have a thickness of 3 to 500 µm. There is no particular limit to materials for the anode current collector, so long as they have suitable conductivity without causing chemical changes in the fabricated battery. As examples of materials for the anode current collector, mention may be made of copper, stainless steel, aluminum, nickel, titanium, sintered carbon, copper or stainless steel having a surface treated with carbon, nickel, titanium or silver, and aluminum-cadmium alloys. Similar to the cathode current collector, the anode current collector may also be processed to form fine irregularities on the surfaces thereof so as to enhance adhesive strength to the anode active material. In addition, the anode current collector may be used in various forms including films, sheets, foils, nets, porous structures, foams and non-woven fabrics.

As examples of the anode active materials utilizable in the present invention, mention may be made of carbon such as non-graphitizing carbon and graphite-based carbon; metal composite oxides such as LiₓFe₂O₃ (0≤x≤1), LiₓWO₂ (0≤x≤1) and SnₓMe₁₋ₓMe'_{y}O_{z} (Me: Mn, Fe, Pb or Ge; Me': Al, B, P, Si, Group I, Group II and Group III elements of the Periodic Table of the Elements, or halogens; 0<x≤1; 1≤y≤; and 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni based materials.

The separator is interposed between the cathode and anode. As the separator, an insulating thin film having high ion permeability and mechanical strength is used. The separator typically has a pore diameter of 0.01 to 10 µm and a thickness of 5 to 300 µm. As the separator, sheets or non-woven fabrics made of an olefin polymer such as polypropylene and/or glass fibers or polyethylene, which have chemical resistance and hydrophobicity, are used. When a solid electrolyte such as a polymer is employed as the electrolyte, the solid electrolyte may also serve as both the separator and electrolyte.

The lithium salt-containing, non-aqueous electrolyte is composed of a non-aqueous electrolyte and lithium. As the non-aqueous electrolyte, a non-aqueous electrolytic solution, solid electrolyte and inorganic solid electrolyte may be utilized.

As the non-aqueous electrolytic solution that can be used in the present invention, for example, mention may be made of non-protic organic solvents such as N-methyl-2-pyrollidinone, propylene carbonate, ethylene carbonate, butylene carbonate, dimethyl carbonate, diethyl carbonate, gamma-butyro lactone, 1,2-dimethoxy ethane, tetrahydroxy Franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate.

As examples of the organic solid electrolyte utilized in the present invention, mention may be made of polyethylene derivatives, polyethylene oxide derivatives, polypropylene oxide derivatives, phosphoric acid ester polymers, poly agitation lysine, polyester sulfide, polyvinyl alcohols, polyvinylidene fluoride, and polymers containing ionic dissociation groups.

As examples of the inorganic solid electrolyte utilized in the present invention, mention may be made of nitrides, halides and sulfates of lithium such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH and Li₃PO₄-Li₂S-SiS₂.

The lithium salt is a material that is readily soluble in the above-mentioned non-aqueous electrolyte and may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imide.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the non-aqueous electrolyte. If necessary, in order to impart incombustibility, the non-aqueous electrolyte may further include halogen-containing solvents such as carbon tetrachloride and ethylene trifluoride. Further, in order to improve high-temperature storage characteristics, the non-aqueous electrolyte may additionally include carbon dioxide gas.

As discussed hereinbefore, sodium phosphates, which correspond to phosphates of Formula I wherein A is Na, can perform precipitation of metal ions as the impurities, simultaneously with provision of flame retardancy.

In general, one of the most significant problems, suffered by lithium secondary batteries, is the low safety of the battery. The lithium secondary batteries are susceptible to the high-risk of ignition under various circumstances such as overcharge, heating from external sources, physical deformation and the like. A variety of methods have been proposed for prevention of overcharge as a cause for such a risk of ignition and for prevention of internal short circuiting resulting from physical deformation. However, in spite of such various preventive measures, there was needed means that can prevent ignition, or can at least inhibit a further progress of ignition when ignition is initiated. For this purpose, several techniques of preventing and suppressing ignition of the battery via the addition of a flame retardant are known in the related art. However, these techniques suffer from inevitable problems associated with deterioration of battery performance caused by direct action of the thus-added flame retardant on main functional elements of the secondary battery to thereby lower an ionic conductivity, consequently resulting in an increased internal resistance of the battery and therefore a decreased discharge capacity.

On the other hand, the sodium phosphate according to the present invention can improve the battery performance by preventing electrodeposition of the metal ions on an anode, via precipitation of the metal ions incorporated during fabrication of the battery, and can also significantly improve the safety of the battery by exerting excellent flame retardancy.

### EXAMPLES

Now, the present invention will be described in more detail with reference to the following examples. These examples are provided only for illustrating the present invention and should not be construed as limiting the scope and spirit of the present invention.

### [Example 1] - Reference

Iron (II) perchlorate hydrate (Fe(ClO₄)₂·xH₂O) was dissolved in a solution of ethylene carbonate (EC) and ethylmethyl carbonate (EMC) (1:2, v/v) containing 1M LiPF₆ salt dissolved therein, which is an electrolyte for a lithium secondary battery, thereby preparing a solution containing 500 ppm of Fe. 2% by weight of ammonium hydrogen phosphate ((NH₄)₂HPO₄) was added to the thus-prepared electrolyte which was then left at room temperature for 24 hours, and the concentration of Fe was determined using inductively coupled plasma-atomic emission spectrophotometer (ICP-AES). The results thus obtained are given in Table 1 below.

### [Example 2] - Reference

An experiment was carried out in the same manner as in Example 1, except that ammonium dihydrogen phosphate (NH₄H₂PO₄) was used instead of ammonium hydrogen phosphate ((NH₄)₂HPO₄). The experimental results thus obtained are given in Table 1 below.

### [Example 3] - Reference

An experiment was carried out in the same manner as in Example 1, except that lithium phosphate (Li₃PO₄) was used instead of ammonium hydrogen phosphate ((NH₄)₂HPO₄). The experimental results thus obtained are given in Table 1 below.

### [Example 4] - Reference

An experiment was carried out in the same manner as in Example 1, except that lithium dihydrogen phosphate (LiH₂PO₄) was used instead of ammonium hydrogen phosphate ((NH₄)₂HPO₄). The experimental results thus obtained are given in Table 1 below.

### [Example 5] - Reference

An experiment was carried out in the same manner as in Example 1, except that sodium hydrogen phosphate (Na₂HPO₄) was used instead of ammonium hydrogen phosphate ((NH₄)₂HPO₄). The experimental results thus obtained are given in Table 1 below.

### [Comparative Example 1]

An experiment was carried out in the same manner as in Example 1, except that ammonium hydrogen phosphate ((NH₄)₂HPO₄) was not added. The experimental results thus obtained are given in Table 1 below.

### [Comparative Example 2]

An experiment was carried out in the same manner as in Example 1, except that ammonium benzoate (C₆H₅COONH₄) was used instead of ammonium hydrogen phosphate ((NH₄)₂HPO₄). The experimental results thus obtained are given in Table 1 below.

**<Table 1>**

| Example No. | Concentration of Fe ions in electrolyte after 24 hours |
|---|---|
| Example 1 * | 180 |
| Example 2 * | 170 |
| Example 3 * | 190 |
| Example 4 * | 160 |
| Example 5 * | 180 |
| Comparative Example 1 | 500 |
| Comparative Example 2 | 350 |

| | |
|---|---|
| * Reference | |

As can be seen from Table 1, electrolytes of Examples 1 through 5 according to the present invention exhibited a significant decrease in the concentration of Fe ions. In particular, it can be confirmed that an electrolyte of Example 4 using lithium dihydrogen phosphate (LiH₂PO₄) shows a significant decrease in the concentration of Fe ions. Whereas, electrolytes of Comparative Examples 1 and 2 showed substantially no change in the concentration of Fe ions.

### [Example 6] - Reference

Upon fabrication of a cathode, 0.5% by weight of ammonium hydrogen phosphate ((NH₄)₂HPO₄) was added to fabricate a cathode. The thus-fabricated cathode and an anode made of graphite were used to fabricate a battery. In addition, iron (II) perchlorate hydrate (Fe(ClO₄)₂·xH₂O) was dissolved in a solution of ethylene carbonate (EC) and ethylmethyl carbonate (EMC) (1:2, v/v) containing 1M LiPF₆ salt dissolved therein, thereby preparing a solution containing 500 ppm of Fe which was then used as an electrolyte. 10 batteries thus fabricated were left in the fully-charged state for one week. As compared to a potential obtained upon completion of battery charge, the number of batteries showing a voltage drop of more than 100 mV is given in Table 2 below.

### [Example 7] - Reference

An experiment was carried out in the same manner as in Example 6, except that ammonium dihydrogen phosphate (NH₄H₂PO₄) was used instead of ammonium hydrogen phosphate ((NH₄)₂HPO₄). The experimental results thus obtained are given in Table 2 below.

### [Example 8] - Reference

An experiment was carried out in the same manner as in Example 6, except that lithium phosphate (Li₃PO₄) was used instead of ammonium hydrogen phosphate ((NH₄)₂HPO₄). The experimental results thus obtained are given in Table 2 below.

### [Example 9] -Reference

An experiment was carried out in the same manner as in Example 6, except that lithium dihydrogen phosphate (LiH₂PO₄) was used instead of ammonium hydrogen phosphate ((NH₄)₂HPO₄). The experimental results thus obtained are given in Table 2 below.

### [Example 10] - Reference

An experiment was carried out in the same manner as in Example 6, except that sodium hydrogen phosphate (Na₂HPO₄) was used instead of ammonium hydrogen phosphate ((NH₄)₂HPO₄). The experimental results thus obtained are given in Table 2 below.

### [Example 11]

An experiment was carried out in the same manner as in Example 6, except that, upon fabrication of a cathode, 0.5% by weight of ammonium hydrogen phosphate ((NH₄)₂HPO₄) and 0.5% by weight of alumino-silicate containing ammonium ions (available from Aldrich) were simultaneously added to fabricate a cathode. The experimental results thus obtained are given in Table 2 below.

### [Comparative Example 3]

An experiment was carried out in the same manner as in Example 6, except that ammonium hydrogen phosphate ((NH₄)₂HPO₄) was not used. The experimental results thus obtained are given in Table 2 below.

**<Table 2>**

| Example No. | Number of batteries undergoing a voltage drop |
|---|---|
| Example 6 * | 2 |
| Example 7 * | 2 |
| Example 8 * | 3 |
| Example 9 * | 1 |
| Example 10 * | 2 |
| Example 11 | 0 |
| Comparative Example 3 | 8 |

| | |
|---|---|
| * Reference | |

As can be seen from Table 2, electrolytes of Reference-Examples 6 to 10 exhibited a significant decrease in the number of batteries undergoing a voltage drop. In particular, the electrolyte of Reference-Example 9 using lithium dihydrogen phosphate (LiH₂PO₄) was found to exert excellent performance. In addition, no occurrence of a voltage drop was observed in the electrolyte of Example 11 involving simultaneous addition of 0.5% by weight of ammonium hydrogen phosphate ((NH₄)₂HPO₄) and 0.5% by weight of alumino-silicate containing ammonium ions (available from Aldrich). Therefore, it can be seen that combined use of the above two components exerts higher effects. Whereas, the electrolyte of Comparative Example 3 exhibited the occurrence of a voltage drop in 8 out of 10 batteries, due to internal short circuiting of the batteries.

### INDUSTRIAL APPLICABILITY

As apparent from the above description, a lithium secondary battery according to the present invention improves life characteristics of the battery by replacing metal cations of metal impurities with the lithium ions, sodium ions and/or ammonium ions which are not detrimental to the operation of the battery, thereby removing the metal impurities and consequently preventing electrodeposition of the metal ions on an anode, through the addition of a certain phosphate compound. In particular, a sodium phosphate provides effects of improving life characteristics while exerting excellent flame retardancy.

## Claims

1. A lithium secondary battery including a phosphate compound, wherein metal ion impurities incorporated during a fabrication process of the battery are precipitated to prevent electrodeposition of the metal ions on an anode, through the addition of one or more phosphates of Formula I below to an electrode active material, an electrolyte or the surface of a separator,
AₓH₍₃₋ₓ₎PO₄ (I)
wherein, A is Li, Na or NH₄; and 0<x≤3.
**characterized in that** metal ion impurities incorporated during an assembly process of the battery are removed via a cation exchange process, by further including a cation exchange material containing cations selected from the group consisting of lithium, sodium, ammonium and any combination thereof, in conjunction with the phosphate of Formula I,
wherein the cation exchange material is alumino-silicate containing ammonium cations, and
wherein the amount of the phosphate added to the cathode or anode active material is in the range of 0.005 to 5% by weight, based on a weight of an electrode active material or
wherein the amount of the phosphate added to the electrolyte is in the range of 0.005 to 5% by weight, based on a weight of the electrolyte or
wherein the phosphate is coated in the range of 0.005 to 50 g/m² to the surface of the separator.

2. The battery according to claim 1, wherein the phosphate is selected from the group consisting of ammonium hydrogen phosphate ((NH₄)₂HPO₄), ammonium dihydrogen phosphate (NH₄H₂PO₄), lithium phosphate (Li₃PO₄), lithium dihydrogen phosphate (LiH₂PO₄), sodium phosphate (Na₃PO₄), sodium hydrogen phosphate (Na₂HPO₄), sodium dihydrogen phosphate (NaH₂PO₄) and any combination thereof,

3. The battery according to claim 2, wherein the phosphate is lithium dihydrogen phosphate.

4. The battery according to claim 1, wherein the phosphate has a particle size of less than 50 µm.

5. The battery according to claim 1, wherein the phosphate is added to a cathode or anode active material or is coated on the surface of a separator.

6. The battery according to claim 1, wherein the phosphate is dispersed in conjunction with a fluorine-based material as a base material in a solvent and is then partially or completely coated on the surface of the separator.

7. The battery according to claim 1, wherein the phosphate is a sodium phosphate of Formula I wherein A is Na, and addition of the sodium phosphate performs precipitation of metal ion impurities simultaneously with provision of flame retardancy.

## Patentansprüche

1. Lithium-Sekundärbatterie mit einer Phosphatverbindung, wobei Metallionenverunreinigungen, die während des Herstellungsprozesses der Batterie eingeschlossen wurden, durch Zugabe eines oder mehrerer Phosphate gemäß der nachfolgenden Formel (I) zu einem Elektrodenaktivmaterial, einem Elektrolyten oder der Oberfläche des Separators ausgefällt werden, um eine Elektroabscheidung der Metallionen auf der Anode zu verhindern;
AₓH₍₃₋ₓ₎PO₄ (I)
wobei A Li, Na oder NH₄ ist; und 0 < x ≤ 3 ist;
**dadurch gekennzeichnet, dass** die Metallionenverunreinigungen, die während des Herstellungsprozesses der Batterie eingeschlossen wurden, durch einen Kationenaustauschprozess entfernt werden, indem in Verbindung mit dem Phosphat der Formel I ferner ein Kationenaustauschmaterial enthalten ist, das Kationen enthält, die aus der Gruppe bestehend aus Lithium, Natrium, Ammonium und jeder Kombination davon ausgewählt werden,
wobei das Kationenaustauschmaterial ein Alumino-Silikat mit Ammoniumkationen ist und
wobei die Menge des zu dem Kathoden- oder Anodenaktivmaterial zugegebenen Phosphats im Bereich von 0,005 bis 5 Gew.%, bezogen auf das Gewicht des Elektrodenaktivmaterials, liegt oder
wobei die Menge des zu dem Elektrolyten zugegebenen Phosphats im Bereich von 0,005 bis 5 Gew.%, bezogen auf das Gewicht des Elektrolyten, liegt oder
wobei das Phosphat im Bereich von 0,005 bis 50 g/m² auf die Oberfläche des Separators aufgetragen wird.

2. Batterie gemäß Anspruch 1, wobei das Phosphat ausgewählt wird aus der Gruppe, bestehend aus Ammoniumhydrogenphosphat ((NH₄)₂HPO₄), Ammoniumdihydrogenphosphat (NH₄H₂PO₄), Lithiumphosphat (Li₃PO₄), Lithiumdihydrogenphosphat (LiH₂PO₄), Natriumphosphat (Na₃PO₄), Natriumhydrogenphosphat (Na₂HPO₄), Natriumdihydrogenphosphat (NaH₂PO₄) und jeder Kombination davon.

3. Batterie gemäß Anspruch 2, wobei das Phosphat Lithiumdihydrogenphosphat ist.

4. Batterie gemäß Anspruch 1, wobei das Phosphat eine Teilchengröße von weniger als 50 µm hat.

5. Batterie gemäß Anspruch 1, wobei das Phosphat zu einem Kathoden- oder Anodenaktivmaterial zugegeben wird oder auf die Oberfläche eines Separators aufgetragen wird.

6. Batterie gemäß Anspruch 1, wobei das Phosphat in Verbindung mit einem Fluor-basierten Material als Basismaterial in einem Lösungsmittel dispergiert wird und dann teilweise oder vollständig auf die Oberfläche des Separators aufgetragen wird.

7. Batterie gemäß Anspruch 1, wobei das Phosphat ein Natriumphosphat gemäß Formel I ist, wobei A Na ist, und die Zugabe des Natriumphosphats zur Ausfällung der Metallionenverunreinigungen und der gleichzeitigen Bereitstelllung von Flammschutz führt.

## Revendications

1. Batterie secondaire au lithium comprenant un composé phosphate, dans laquelle les impuretés d'ions métalliques intégrées pendant un procédé de fabrication de la batterie sont précipitées afin d'empêcher l'électrodéposition des ions métalliques sur une anode, par l'addition d'un ou de plusieurs phosphates de la formule I ci-dessous sur un matériau actif d'électrode, un électrolyte ou la surface d'un séparateur,
AₓH₍₃₋ₓ₎PO₄ (I)
dans laquelle, A est Li, Na ou NH₄ ; et 0 < x ≤ 3.
**caractérisé en ce que** les impuretés d'ions métalliques intégrées pendant un procédé d'assemblage de la batterie sont retirées par l'intermédiaire d'un processus d'échange de cations, en incluant en outre un matériau échangeur de cations contenant des cations choisis dans le groupe constitué par le lithium, le sodium, l'ammonium et n'importe quelle combinaison de ceux-ci, conjointement au phosphate de formule I,
dans laquelle le matériau échangeur de cations est un alumino-silicate contenant des cations ammonium, et
dans laquelle la quantité du phosphate ajouté sur la cathode ou le matériau actif d'anode est dans la plage de 0,005 à 5 % en poids, sur la base d'un poids d'un matériau actif d'électrode ou
dans laquelle la quantité du phosphate ajouté à l'électrolyte est dans la plage de 0,005 à 5 % en poids, sur la base d'un poids de l'électrolyte ou
dans laquelle le phosphate est revêtu dans la plage de 0,005 à 50 g/m² sur la surface du séparateur.

2. Batterie selon la revendication 1, dans laquelle le phosphate est choisi dans le groupe constitué par l' hydrogénophosphate d'ammonium ((NH₄)₂HPO₄), le dihydrogénophosphate d'ammonium (NH₄H₂PO₄), le phosphate de lithium (Li₃PO₄), le dihydrogénophosphate de lithium (LiH₂PO₄), le phosphate de sodium (Na₃PO₄), le phosphate acide de sodium (Na₂HPO₄), le dihydrogénophosphate de sodium (NaH₂PO₄) et n'importe quelle combinaison de ceux-ci.

3. Batterie selon la revendication 2, dans laquelle le phosphate est le dihydrogénophosphate de lithium.

4. Batterie selon la revendication 1, dans laquelle le phosphate a une taille de particules inférieure à 50 µm.

5. Batterie selon la revendication 1, dans laquelle le phosphate est ajouté sur une cathode ou un matériau actif d'anode ou est revêtu sur la surface d'un séparateur.

6. Batterie selon la revendication 1, dans laquelle le phosphate est dispersé conjointement à un matériau à base de fluor comme matériau de base dans un solvant et est ensuite partiellement ou totalement revêtu sur la surface du séparateur.

7. Batterie selon la revendication 1, dans laquelle le phosphate est un phosphate de sodium de formule I dans laquelle A est Na, et l'addition du phosphate de sodium réalise une précipitation des impuretés d'ions métalliques simultanément à la fourniture d'un caractère ignifuge.
